Europäisches Patentamt

European Patent Office

Office européen des brevets

(19)

(11) Numéro de publication : **0 296 961 B1**

(12)

# FASCICULE DE BREVET EUROPEEN

(45) Date de publication du fascicule du brevet :
03.04.91 Bulletin 91/14

(51) Int. Cl.⁵ : **F16B 5/06, F16B 13/06,**
**F16B 21/04, // B62D25/14**

(21) Numéro de dépôt : **88401545.4**

(22) Date de dépôt : **21.06.88**

(54) **Dispositif de fixation.**

(30) Priorité : **23.06.87 FR 8708804**

(43) Date de publication de la demande :
**28.12.88 Bulletin 88/52**

(45) Mention de la délivrance du brevet :
**03.04.91 Bulletin 91/14**

(84) Etats contractants désignés :
**BE DE ES GB IT**

(56) Documents cités :
**EP-A- 0 081 656**
**DE-A- 1 289 681**
**FR-A- 2 276 494**
**US-A- 4 343 565**

(73) Titulaire : **REGIE NATIONALE DES USINES**
**RENAULT**
**Boîte postale 103 8-10 avenue Emile Zola**
**F-92109 Boulogne-Billancourt (FR)**

(72) Inventeur : **Salobert, Jacques**
**11, rue des Graviers**
**F-78890 Garancieres (FR)**

(74) Mandataire : **Chassagnon, Jean Alain et al**
**8/10, avenue Emile Zola**
**F-92109 Boulogne-Billancourt (FR)**

## Description

La présente invention se rapporte à un dispositif de fixation et de centrage, qui s'applique notamment au montage de planches de bord de véhicules automobiles.

On réalise habituellement le montage des planches de bord par des systèmes vis et écrous, qui viennent se monter directement sur la traverse de baie. Ce type de dispositif de fixation présente l'inconvénient de ne pas garantir à la fois le blocage et le centrage de la planche de bord, lors du montage. De plus, l'ensemble ainsi monté a une mauvaise tenue lors de variations importantes de température. En effet, la matière plastique est soumise à des dilatations plus importantes que l'acier lors des variations de température. Il existe alors une dilatation différentielle entre les différents éléments de l'ensemble, ce qui provoque un desserrage avec l'apparition de bruits et de sifflements.

L'utilisation de boulons présente aussi l'inconvénient de nécessiter la tenue des têtes de vis lors du blocage de l'ensemble. Ceci est particulièrement gênant pour le montage en chaîne des véhicules automobiles, où la préhension des éléments des boulons est délicate et difficilement accessible. Il faut alors utiliser des outillages spécifiques qui sont coûteux et qui nécessitent un temps de montage relativement important.

Il existe également des systèmes utilisant la coopération d'éléments en plastique et d'éléments en métal comme dans les documents DE-B-1289681 et US-A-4343565.

Le but de la présente invention est de proposer un dispositif de fixation et de centrage, notamment pour le montage de planches de bord de véhicules automobiles, et qui soit insensible aux variations de température, tout en permettant lors du montage en chaîne une mise en place rapide sans l'intervention d'outillage spécifique.

A cet effet, le dispositif de fixation et de centrage comporte une gaine en matière plastique possédant une partie conique, qui coopère avec une forme conjuguée conique appartenant à l'élément à fixer. Cette gaine est associée à des moyens de fixation sur l'élément support et à des moyens de pression, qui agissent sur ladite gaine de manière à bloquer l'élément à fixer sur l'élément support en s'adaptant à l'épaisseur dudit élément support ; les moyens de fixation sur l'élément support consistent en :

    – une embase qui s'applique sur la face interne de l'élément support et dont la face conique reçoit la partie conjuguée de la gaine ;

    – une tige traversant l'embase et la gaine et ayant une tête cylindrique munie de deux tétons diamétralement opposés de manière que, dans un premier temps, ladite tête puisse franchir une lumière de forme conjuguée et aménagée dans l'élément support, et, dans un deuxième temps, ladite tête puisse tourner d'un quart de tour de manière que lesdits tétons viennent s'appliquer sur la face externe de l'élément support ;

    les moyens de pression consistent en un levier qui s'articule autour d'un axe monté sur l'extrémité de la tige de manière qu'après rotation supérieure à un quart de tour du levier, ledit levier comprime la gaine qui s'épanouit derrière l'élément à fixer qui est ainsi bloqué sur l'élément support.

La gaine est de préférence munie d'une rondelle d'appui sur laquelle agit le levier, sur lequel sont aménagés des crans.

Selon un mode de réalisation de l'invention, l'embase est solidaire en rotation avec la tige au moyen d'une section de forme hexagonale. L'embase est munie de deux plots diamétralement opposés et décalés d'un angle de 90° par rapport aux tétons, de manière que lesdits plots viennent se loger dans la lumière de l'élément support après la rotation d'un quart de tour pour afficher la position de l'ensemble du dispositif. L'embase comporte de plus une gorge, qui permet de recevoir le retour de tôle de l'élément support. D'autre part, la gaine est munie d'une lèvre d'étanchéité, qui s'applique sur la face interne de l'élément support.

L'invention présente ainsi l'avantage de permettre un montage rapide sans recourir à des outillages spécifiques et encombrants. De plus, le dispositif selon l'invention permet à la fois la fixation et le centrage de l'élément à fixer tel qu'une planche de bord, le montage ainsi réalisé étant insensible aux variations de température, ce qui évite l'apparition de bruits parasites.

L'invention sera mieux comprise par l'étude d'un mode de réalisation particulier décrit à titre nullement limitatif et illustré par les dessins annexés, sur lesquels :

    – la figure 1 est une vue en coupe de l'ensemble du dispositif de fixation selon l'invention, en position non bloquée ;

    – la figure 2 est une vue correspondant à la figure 1 du dispositif de fixation en position bloquée ;

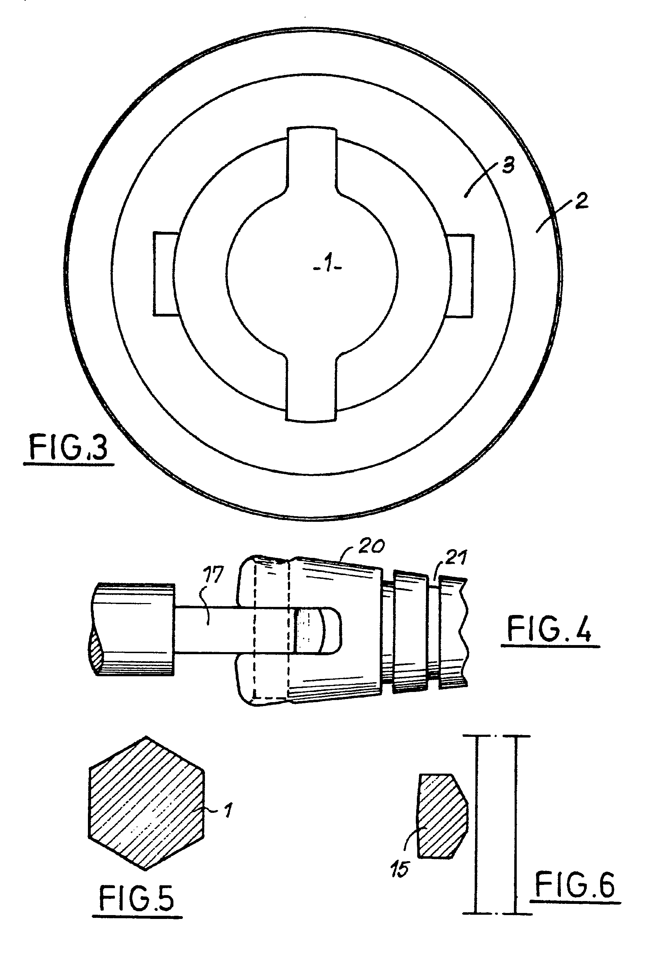

    – la figure 3 est une vue partielle en perspective suivant la figure 1 ;

    – la figure 4 est une vue partielle suivant la figure 1 ;

    – la figure 5 est une vue en coupe partielle suivant la figure 1 ;

    – la figure 6 est une coupe partielle suivant la figure 1.

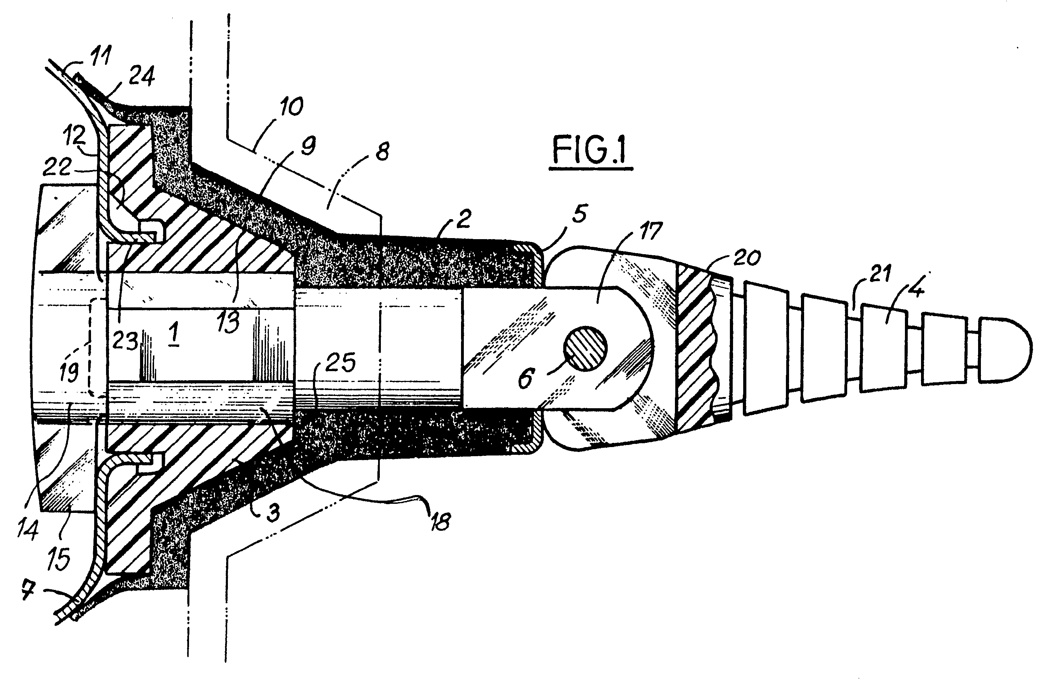

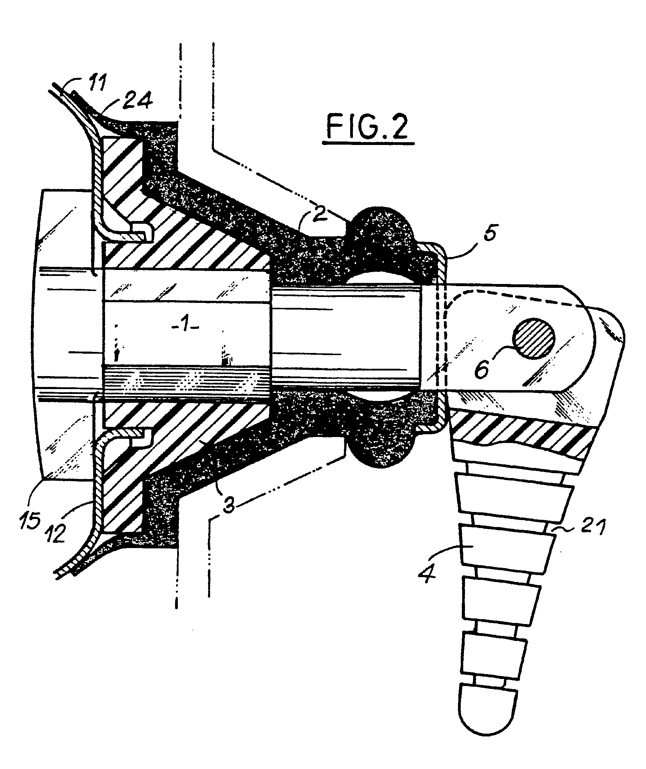

L'ensemble du dispositif selon l'invention permet la fixation et le centrage d'un élément à fixer 8 sur l'élément support 7 représenté sur les figures 1 et 2. L'élément à fixer 8 peut être une planche de bord, qui vient se monter sur l'élément support 7, qui est, dans ce cas, la traverse de baie. L'invention consiste essentiellement en une gaine 2 en matière élastique avec une partie conique 9 qui coopère avec une forme conique 10 conjuguée appartenant à l'élément à fixer 8. L'élément à fixer 8 a ainsi un trou de forme conique 10, qui lui permet de venir se monter sur la gaine 2. Cette gaine 2 est associée à des moyens de fixation sur l'élément support 7 et a des moyens de pression, qui agissent sur ladite gaine 2 de manière à bloquer l'élément à fixer 8 sur l'élément support 7 en s'adaptant à l'épaisseur dudit élément support 7.

Une embase 3 vient se monter dans la gaine 2, et reçoit une tige 1 qui traverse ladite embase 3 puis la gaine 2. L'extrémité de la tige 1 débouche de la gaine 2 et supporte un axe 6 sur lequel vient s'articuler un levier 4. Les moyens de fixation sur l'élément support 7 sont assurés par l'embase 3 et la tige 1 au moyen de sa tête cylindrique 14. Les moyens de pression sont donnés par le levier 4 qui vient s'appliquer sur la gaine 2.

L'embase 3 s'applique sur la face interne 11 de l'élément support 7, et elle a une partie extérieure avec une face conique 13 qui reçoit la partie conique 9 conjuguée de la gaine 2. L'embase 3 comporte également une gorge 22 qui permet de recevoir le retour de tôle 23 de l'élément support 7.

La tige 1 traverse l'embase 3 et la gaine 2 et a une tête cylindrique 14 qui est munie de 2 tétons 15 diamétralement opposés. Ces tétons 15 permettent, dans un premier temps, à ladite tête cylindrique 14 de pouvoir franchir une lumière 16 de forme conjuguée et aménagée dans l'élément support 7 et, dans un deuxième temps, à ladite tête cylindrique 14 de pouvoir tourner d'un quart de tour de manière que lesdits tétons 15 viennent s'appliquer sur la face externe 12 de l'élément support 7.

L'embase 3 est solidaire en rotation avec la tige 1 au moyen d'une section de forme hexagonale. De plus, l'embase est munie de deux plots 19 diamétralement opposés et décalés d'un angle de 90° par rapport aux tétons 15 de la tige 1. Les plots 19 peuvent ainsi venir se loger dans la lumière de l'élément support 7 après la rotation d'un quart de tour de la tige 1, ce qui assure l'affichage de la position de l'ensemble du dispositif.

L'embase 3 et la partie de forme hexagonale 18 de la tige 1 viennent s'appliquer l'une et l'autre sur le fond 25 de la gaine 2. L'extrémité 17 de la tige 1 consiste en une partie aplatie qui reçoit l'extrémité du levier 4 en forme de fourchette. L'extrémité 17 supporte un axe 6 qui traverse de part en part le levier 4, de manière que ledit levier 4 puisse s'articuler autour de l'axe 6 afin d'assurer la pression sur la gaine 2. La gaine 2 est munie du côté du levier d'une rondelle d'appui 5. Après une rotation supérieure à un quart de tour du levier 4 sur l'axe 6, ledit levier 4 vient comprimer la rondelle d'appui 5 de la gaine 2, qui s'épanouit derrière l'élément à fixer 8. L'élément à fixer 8 est ainsi bloqué sur l'élément support 7.

Pour faciliter la préhension, le levier 4 a une forme qui est sensiblement celle d'un tronc de pyramide, et un profil 20 conformé suivant les figures 1 et 4. De plus, le levier 4 est muni de saignées 21.

Pour assurer l'étanchéité de l'ensemble du dispositif, la gaine 2 comporte une lèvre d'étanchéité 24, qui s'applique sur la face interne 11 de l'élément support 7.

La tige 1 qui reçoit l'embase 3 et la gaine 2, et dont l'extrémité 17 reçoit l'axe 6 sur lequel se monte le levier 4, forme ainsi un sous-ensemble complet. Ce sous-ensemble vient se monter sur l'élément support 7 comme cela a été expliqué précédemment. Ce sous-ensemble complet peut alors recevoir l'élément à fixer 8, qui est ainsi bloqué après la rotation du levier 4.

**Revendications**

1. Dispositif de fixation et de centrage comportant une gaine (2) en matière plastique ayant une partie conique (9), qui coopère avec une forme conique (10) conjuguée appartenant à un élément à fixer (8), ladite gaine (2) étant associée à des moyens de fixation sur un élément support (7) et à des moyens de pression qui agissent sur ladite gaine (2) de manière à bloquer l'élément à fixer (8) sur l'élément support (7) en s'adaptant à l'épaisseur dudit élément support (7) ; les moyens de fixation sur l'élément support (7) consistent en :

– une embase (3) qui s'applique sur la face interne (11) de l'élément support (7) et dont la face conique (13) reçoit la partie conique (9) conjuguée de la gaine (2) ;
– une tige (1) traversant l'embase (3) et la gaine (2), et ayant une tête cylindrique (14) munie de deux tétons (15) diamétralement opposés de manière que, dans un premier temps, ladite tête cylindrique (14) puisse franchir une lumière (16) de forme conjuguée et aménagée dans l'élément support (7) et, dans un deuxième temps, ladite tête puisse tourner d'un quart de tour de manière que lesdits tétons (15) viennent s'appliquer sur la face externe (12) de l'élément support (7) ;
les moyens de pression consistent en un levier (4) qui s'articule autour d'un axe (6) monté sur l'extrémité de la tige (1) de manière qu'après une rotation supérieure à un quart de tour du levier (4), ledit levier (4) comprime la gaine (2) qui s'épanouit derrière l'élément à fixer (8) qui est ainsi bloqué sur l'élément support (7).

2. Dispositif de fixation selon la revendication 1 caractérisé en ce que l'embase (3) est solidaire en rotation avec la tige (1) au moyen d'une section de forme hexagonale, ladite embase (3) étant munie de deux plots (19) diamétralement opposés et décalés d'un angle de 90° par rapport aux tétons (15), de manière que lesdits plots (19) viennent se loger dans la lumière (16) de l'élément support (7) après la rotation d'un quart de tour pour afficher la position de l'ensemble du dispositif.

3. Dispositif de fixation selon la revendication 1 caractérisé en ce que la gaine (2) est munie d'une rondelle d'appui (5) sur laquelle agit le levier (4).

4. Dispositif de fixation selon la revendication 1 caractérisé en ce que le levier (4) a une forme qui est sensiblement celle d'un tronc de pyramide.

5. Dispositif de fixation selon la revendication 1 caractérisé en ce que le levier (4) est muni de saignées (21).

6. Dispositif de fixation selon la revendication 1 caractérisé en ce que l'embase (3) comporte une gorge (22) qui permet de recevoir le retour de tôle (23) de l'élément support.

7. Dispositif de fixation selon la revendication 1 caractérisé en ce que la gaine (2) comporte une lèvre d'étanchéité (24) qui s'applique sur la face interne (11) de l'élément support (7).


## Ansprüche

1. Befestigungs- und Zentriervorrichtung, mit einer Buchse (2) aus Kunststoff, welche einen konischen Abschnitt (9) aufweist, der mit einem angepaßten konischen Formstück (10) eines zu befestigenden Teiles (8) zusammenwirkt, wobei die Buchse (2) einer Befestigungsanordnung auf einem Trageteil (7) zugeordnet ist, sowie einer Druckanordnung, welche die Buchse (2) derart beaufschlagt, daß das zu befestigende Teil (8) am Trageteil (7) festgestellt wird unter Anpassung an die Dicke des Trageteils (7) ; die Befestigungsanordnung am Trageteil (7) besteht aus :
    – einem Grundteil (3), das sich auf der Innenfläche (11) des Trageteils (7) abstützt und dessen konische Fläche (13) den konischen angepaßten Abschnitt (9) der Buchse (2) aufnimmt ;
    – einem Stab (1), der das Grundteil (3) und die Buchse (2) durchsetzt, mit einem zylindrischen Kopf (14), der mit zwei Zapfen (15) versehen ist, die sich dergestalt diametral gegenüber stehen, daß zu einem ersten Zeitpunkt der zylindrische Kopf (14) eine im Trageteil (7) vorgesehene angepaßte Aussparung (16) kreuzt und daß zu einem zweiten Zeitpunkt der Kopf eine Vierteldrehung dergestalt ausführen kann, daß die Zapfen (15) an der Außenfläche (12) des Trageteils (7) anliegen ;
    – einer Druckanordnung, die einen Hebel (4) aufweist, der um eine Achse (6) schwenkt, die am Ende des Stabes (1) dergestalt angeordnet ist, daß nach einer oberen Vierteldrehung des Hebels (4) dieser die Buchse (2) komprimiert, welche sich hinter das zu befestigende Teil (8) stülpt, so daß dieses am Trageteil (7) festgestellt ist.

2. Vorrichtung nach Anspruch 1, dadurch gekennzeichnet, daß das Grundteil (3) drehfest mit dem Stab (1) über einen sechseckigen Querschnitt verbunden ist und daß das Grundteil (3) mit zwei Fühlern (19) versehen ist, welche sich diametral gegenüber stehen und um einen Winkel von 90° bezüglich den Zapfen (15) verschoben sind, so daß die Fühler (19) in die Aussparung (16) des Trageteils (7) nach einer Vierteldrehung eingreifen, um die Stellung der Vorrichtung anzuzeigen.

3. Vorrichtung nach Anspruch 1, dadurch gekennzeichnet, daß die Buchse (2) mit einer Stützscheibe (5) versehen ist, auf welche der Hebel (4) einwirkt.

4. Vorrichtung nach Anspruch. 1, dadurch gekennzeichnet, daß der Hebel (4) eine Form aufweist, die im wesentlichen derjenigen eines Pyramidenstumpfes entspricht.

5. Vorrichtung nach Anspruch 1, dadurch gekennzeichnet, daß der Hebel (4) mit Nuten (21) versehen ist.

6. Vorrichtung nach Anspruch 1, dadurch gekennzeichnet, daß das Grundteil (3) eine Nut (22) aufweist zur Aufnahme eines Blechrandes (23) des Trageteils.

7. Vorrichtung nach Anspruch 1, dadurch gekennzeichnet, daß die Buchse (2) eine Dichtlippe (24) enthält, die sich auf der Innenfläche (11) des Trageteils (7) abstützt.


## Claims

1. A fixing and centering device comprising a sheath (2) of plastics material having a conical portion (9) which co-operates with a conjugate conical shape (10) belonging to an element (8) to be fixed, said sheath (2) being associated with fixing means on a support element (7) and with pressing means which act on said sheath (2) so as to lock the element (8) to be fixed to the support element (7), while adapting to the thickness of said support element (7) ; the fixing means on the support element (7) consist of :
    – a base (3) which is applied against the internal face (11) of the support element (7) and the conical face (13) of which receives the conjugate conical portion (9) of the sheath (2) ;
    – a rod (1) passing through the base (3) and the sheath (2) and having a cylindrical head (14) provided with two diametrally opposed lugs (15) in such a way that in a first phase said cylindrical head (14) can pass through an opening (16) of conjugate shape provided in the support element (7) and in a second phase said head can turn through a quarter of a revolution in such a way that said lugs (15) come to bear against the external face (12) of the support element (7) ;
    the pressing means consist of a lever (4) which is pivoted about a spindle (6) mounted on the end of the rod (1) in such a way that after a rotary movement of more than a quarter of a revolution of the lever (4) said lever (4) compresses the sheath (2) which expands behind the element (8) to be fixed which is thus locked on the support element (2).

2. A fixing device according to claim 1 characterised in that the base (3) is fixed in respect of rotation to the rod (1) by means of a section of hexagonal shape, said base (3) being provided with two diametrally opposed studs (19) which are displaced through an angle of 90° with respect to the lugs (15) in such a way that said studs (19) are accommodated in the opening (16) in the support element (7) after the rotary movement through a quarter of a revolution to display the position of the assembly of the device.

3. A fixing device according to claim 1 characterised in that the sheath (2) is provided with a support washer (5) against which the lever (4) acts.

4. A fixing device according to claim 1 characterised in that the lever (4) is a shape itch is substantially that of a truncated pyramid.

5. A fixing device according to claim 1 characterised in that the lever (4) is provided with grooves (21).

6. A fixing device according to claim 1 characterised in that the base (3) comprises a groove (22) for receiving the sheet metal edge flange portion (23) of the support element.

7. A fixing device according to claim 1 characterised in that the sheath (2) comprises a sealing lip (24) which is applied against the internal face (11) of the support element (7).

FIG.1

FIG.2

FIG.3

FIG.4

FIG.5

FIG.6